# EUROPEAN PATENT APPLICATION

(11) **EP 1 994 979 A1**
(43) Date of publication of application: **26.11.2008**
(21) Application number: 08156809.9
(22) Date of filing: 23.05.2008
(51) Int. Cl.: B01J 13/00

(54) **Method for producing zirconia sol**

(30) Priority: 23.05.2007 JP 2007136303
(71) Applicant: Nissan Chemical Industries, Ltd., Chiyoda-ku, Tokyo 101-0054 (JP)
(72) Inventor: Kato, Hirokazu, 11-1, Kitasode Sodegaura-shi, Chiba (JP); Tsuihiji, Natsumi, 11-1, Kitasode Sodegaura-shi, Chiba (JP); Ohmori, Yutaka, 11-1, Kitasode Sodegaura-shi, Chiba (JP)
(74) Representative: HOFFMANN EITLE

(57) **Abstract**

A production method of a zirconia sol includes; (A) mixing a dicarboxylic acid compound with a zirconium compound in an aqueous medium, in which a molar ratio of the dicarboxylic acid compound is more than 1 and less than or equal to 10 per mol of zirconium atom in the zirconium compound, and (B) adding 0.7-2.5 mol of a water-soluble organic base per mol of the dicarboxylic acid compound contained in a mixture obtained by the process (A) to the mixture and then treating hydrothermally the resultant mixture.

## Description

### BACKGROUND OF THE INVENTION

### 1. Field of the Invention

The present invention relates to a method for producing a zirconia sol having excellent transparency and stability.

### 2. Description of the Related Art

Conventionally, as a production method of a zirconia sol, a method of hydrolyzing a zirconium hydroxide compound obtained by adding an alkali to an aqueous solution containing a water-soluble zirconium salt such as zirconium oxychloride has been known.

For example, Japanese Patent No. 3284413 discloses a production method of a hydrated zirconia sol having an average particle diameter controlled within a range of 0.05-0.3 µm produced by preparing zirconium hydroxide by adding an aqueous ammonia solution to an aqueous zirconium oxychloride solution and, after filtering and water washing the obtained zirconium hydroxide, heat-treating a slurry mixture of the obtained zirconium hydroxide having controlled acid concentration by adding an acid. Examples of acids include inorganic acids such as hydrochloric acid, nitric acid, and sulfuric acid; and organic acids such as acetic acid and citric acid.

In addition, Japanese Patent Application Publication No. JP-A-2005-179111 discloses a production method of a zirconia sol produced by adding an aqueous alkaline solution to a zirconium compound aqueous solution in the presence of a carboxylic acid or a hydroxycarboxylic acid to obtain a dispersion of zirconium hydroxide compound gel, washing the obtained dispersion of zirconium hydroxide compound gel by ultrafiltration and deionizing the gel with ion-exchange resin, and treating the washed zirconium hydroxide compound gel hydrothermally to obtain a zirconia sol, and further washing the obtained zirconia sol.

In the method according to JP-A-2005-179111, processes are complex with a low production efficiency because washing a zirconium hydroxide compound gel by ultrafiltration and deionization with ion-exchange resin are required before a hydrothermal treatment process of the zirconium hydroxide compound gel. In addition, although an obtained zirconia sol has small particle diameter and excellent transparency, a stable pH range is limited within 3-5.

The purpose of the present invention is to provide an efficient production method of a zirconia sol having excellent transparency and significantly improved stability in not only acidic region but also basic and neutral region produced by mixing a dicarboxylic acid compound with a zirconium compound, adding a water-soluble organic base containing an organic amine or a quaternary ammonium hydroxide compound to the obtained mixture, and treating hydrothermally the resultant mixture having relatively high salts concentration without washing process.

According to the present invention, a zirconia sol having excellent transparency is obtained by a production method having good productivity and simple processes. The obtained zirconia sol has excellent stability in not only acidic region but also basic and neutral region. The zirconia sol obtained by the method according to the present invention has excellent transparency and stability, so that the sol may be used for various applications. For example, the sol may preferably be used for fillers for composite materials such as nano-composite and optical applications such as high refractive index materials and refractive index adjusters. The sol also may be used for raw materials for electronic materials such as ceramics and sensors, binders for fireproof molded articles and casting molds, catalysts, abrasive compounds and other applications.

### SUMMARY OF THE INVENTION

As a first aspect according to the present invention, a method for producing a zirconia sol includes: (A) mixing a dicarboxylic acid compound with a zirconium compound in an aqueous medium, in which a molar ratio of the dicarboxylic acid compound is more than 1 and less than or equal to 10 per mol of zirconium atom in the zirconium compound, and (B) adding 0.7-2.5 mol of a water-soluble organic base per mol of the dicarboxylic acid compound contained in a mixture obtained by the process (A) to the mixture and then treating hydrothermally a resultant mixture; as a second aspect, in the method for producing a zirconia sol according to the first aspect, a temperature of the hydrothermal treatment of the process (B) is 110-250°C; as a third aspect, the method for producing a zirconia sol according to the first aspect or the second aspect further includes washing and condensation after the process (B); as a fourth aspect, a method for producing a zirconia sol includes:
(A) mixing a dicarboxylic acid compound with a zirconium compound in an aqueous medium, in which a molar ratio of the dicarboxylic acid compound is more than 1 and less than or equal to 10 per mol of zirconium atom in the zirconium compound, and
(B') after heating a mixture obtained by the process (A) to 50-100°C, adding 0.7-2.5 mol of a water-soluble organic base per mol of the dicarboxylic acid compound contained in the mixture to the mixture and then treating hydrothermally a resultant mixture;
   as a fifth aspect, in the method for producing a zirconia sol according to the fourth aspect, a temperature of the hydrothermal treatment of the process (B') is 110-250°C;
   as a sixth aspect, the method for producing a zirconia sol according to the fourth aspect or the fifth aspect further includes washing and condensation after the process (B');
   as a seventh aspect, in the method for producing a zirconia sol according to any one of the first aspect to the sixth aspect, at least one compound selected from a group consisting of oxalic acid, malonic acid, malic acid, tartaric acid, succinic acid, adipic acid, maleic acid and itaconic acid is used as the dicarboxylic acid compound;
   as an eighth aspect, in the method for producing a zirconia sol according to any one of the first aspect to the seventh aspect, at least one compound selected from a group consisting of zirconium nitrate, zirconium oxychloride, zirconium oxynitrate, zirconium oxysulfate and zirconium oxycarbonate is used as the zirconium compound;
   as a ninth aspect, in the method for producing a zirconia sol according to any one of the first aspect to the eighth aspect, an organic amine compound or a quaternary ammonium hydroxide is used as the water-soluble organic base;
   as a tenth aspect, in the method for producing a zirconia sol according to any one of the first aspect to the ninth aspect, at least one compound selected from a group consisting of methylamine, dimethylamine, trimethylamine, methanolamine, dimethanolamine, trimethanolamine, ethylamine, diethylamine, triethylamine, ethanolamine, diethanolamine, triethanolamine, N-methylethanolamine, N-methyldiethanolamine, dimethylethanolamine, n-prapylamine, di-n-propylamine, tri-n-propylamine, n-propanolamine, di-n-propanolamine, tri-n-propanolamine, isopropylamine, diisopropylamine, triisopropylamine, isopropanolamine, diisopropanolamine, triisopropanolamine, n-butylamine, di-n-butylamine, n-butanolamine, di-n-butanolamine, tri-n-butanolamine, isobutylamine, diisobutylamine, isobutanolamine, diisobutanolamine, triisobutanolamine, benzylamine, phenylamine, piperazine, piperidine and ethylenediamine is used as the organic amine compound; and
   as an eleventh aspect, in the method for producing a zirconia sol according to any one of the first aspect to the tenth aspect, at least one compound selected from a group consisting oftetramethylammoniurn hydroxide, tetraethylammonium hydroxide, tetrapropylammonium hydroxide, tetraisopropylammonium hydroxide, tetrabutylammonium hydroxide, monomethyltriethylammonium hydroxide, monomethyltriethanolammonium hydroxide, monomethyltributylammonium hydroxide, octyltrimethylammonium hydroxide, benzyltrimethylammonium hydroxide, benzyltriethylammonium hydroxide, benzyltributylammonium hydroxide, phenyltrimethylammonium hydroxide and phenyltriethylammonium hydroxide is used as the quaternary ammonium hydroxide.

### DETAILED DESCRIPTION OF THE PREFERRED EMBODIMENTS

An embodiment of the present invention provides a production method of a zirconia sol including:
(A) mixing a dicarboxylic acid compound with a zirconium compound in an aqueous medium, in which a molar ratio of the dicarboxylic acid compound is more than 1 and less than or equal to 10 per mol of zirconium atom in the zirconium compound, and
(B) adding 0.7-2.5 mol of a water-soluble organic base per mol of the dicarboxylic acid compound contained in a mixture obtained by the process (A) to the mixture and treating hydrothermally a resultant mixture at 110-250°C.

In addition, another embodiment of the present invention provides a production method of a zirconia sol including:
(A) mixing a dicarboxylic acid compound with a zirconium compound in an aqueous medium, in which a molar ratio of the dicarboxylic acid compound is more than 1 and less than or equal to 10 per mol of zirconium atom in the zirconium compound; and
(B') after heating a mixture obtained by the process (A) to 50-100°C, adding 0.7-2.5 mol of a water-soluble organic base per mol of the dicarboxylic acid compound contained in the mixture to the mixture, and then treating hydrothermally a resultant mixture at 110-250°C.

The process (A) according to the present invention is the process of mixing a dicarboxylic acid compound with a zirconium compound in an aqueous medium, in which a molar ratio of the dicarboxylic acid compound is more than 1 and less than or equal to 10 per mol of zirconium atom in the zirconium compound.

As zirconium compounds used in the present invention, at least one compound selected from a group consisting of zirconium nitrate, zirconium oxychloride, zirconium oxynitrate, zirconium oxysulfate, zirconium oxyacetate and zirconium oxycarbonate may be used and zirconium oxycarbonate is preferable. Use of zirconium oxycarbonate tends to accelerate a reaction between a zirconium compound and a dicarboxylic acid compound because a carbonic acid component is eliminated as carbon dioxide by contacting zirconium oxycarbonate to a dicarboxylic acid compound.

A concentration of a zirconium compound in the aqueous medium, which is calculated as ZrO₂ after addition of a water-soluble organic base in the process (B) or (B'), is 0.5-20% by mass, and preferably 1-10% by mass. When the concentration calculated as ZrO₂ is less than 0.5% by mass, production efficiency is low, and when concentration calculated as ZrO₂ is higher than 20% by mass, a viscosity of the mixture may increase during production processes, which is therefore not preferable.

A dicarboxylic acid compound used in the process (A) is an organic compound having two carboxyl groups in one molecule and is soluble in water. Specifically, at least one compound selected from a group consisting of oxalic acid, malonic acid, malic acid, tartaric acid, succinic acid, adipic acid, maleic acid and itaconic acid may be used. Oxalic acid is preferably used. When a monocarboxylic acid compound is used instead of dicarboxylic acid compound in the process (A), a product after hydrothermal treatment may not form a sol but a slurry, which is therefore not preferable.

An amount of a dicarboxylic acid compound used in the process (A) is a molar ratio of the dicarboxylic acid compound being more than 1 and less than or equal to 10 per mol of zirconium atom in a zirconium compound, preferably a molar ratio of 1.1-8 and more preferably a molar ratio of 1.2-5. When a molar ratio of the dicarboxylic acid compound is less than or equal to 1 per mol of zirconium atom in the zirconium compound, a sol having excellent transparency may not be obtained, or not a sol but a slurry may be obtained even if hydrothermal treatment is performed, which is therefore not preferable. On the contrary, when a molar ratio of the dicarboxylic acid compound is more than 10 per mol of zirconium atom in the zirconium compound, the dicarboxylic acid compound may not work efficiently due to incomplete dissolution of the dicarboxylic acid compound into an aqueous medium, or a sol may not be obtained due to a solution-like product generation after hydrothermal treatment, also which is therefore not preferable.

The process (B) according to the present invention is the process of adding 0.7-2.5 mol of a water-soluble organic base per mol of the dicarboxylic acid compound contained in a mixture obtained by the process (A) to the mixture and treating hydrothermally a resultant mixture at 110-250°C. When a temperature of hydrothermal treatment is lower than 110°C, a sufficient hydrothermal treatment can not be conducted, and when higher than 250°C, a sol may not be obtained because the dicarboxylic acid compound is decomposed during hydrothermal treatment, and in addition, special reaction equipment having excellent pressure resistance should be required, which is therefore not preferable. Hydrothermal treatment is conducted by using an autoclave unit. Usually, hydrothermal treatment is performed for 1-20 hours.

In the process (B'), heating a mixture obtained in the process (A) to 50-100°C before adding a water-soluble organic base having a molar ratio of 0.7-2.5 per mol of dicarboxylic acid compound contained in the mixture obtained by mixing a dicarboxylic acid compound with a zirconium compound in an aqueous medium in the process (A), enables to reduce a size of average particle diameter of the obtained zirconia sol measured by dynamic light scattering method compared with not heating the mixture obtained in the process (A) to 50-100°C. The mechanism of this phenomenon is not clear. However, for example, when zirconium oxycarbonate and oxalic acid are used, an average particle diameter of the obtained zirconia sol measured by dynamic light scattering method may become smaller due to accelerating a zirconium oxyoxalate generation with heating to the zirconium oxycarbonate and oxalic acid mixture at 50-100°C.

In the process (B) or the process (B') according to the present invention, an organic amine compound or a quaternary ammonium hydroxide may be used as a water-soluble organic base.

Examples of organic amine compounds which can be used in the process (B) or the process (B') include methylamine, dimethylamine, trimethylamine, methanolamine, dimethanolamine, trimethanolamine, ethylamine, diethylamine, triethylamine, ethanolamine, diethanolamine, triethanolamine, N-methylethanolamine, N-methyldiethanolamine, dimethylethanolamine, n-propylamine, di-n-propylamine, tri-n-propylamine, n-prflpanolamine, di-n-propanolamine, tri-n-propanolamine, isopropylamine, diisopropylamine, triisopropylamine, isopropanolamine, diisopropanolamine, triisopropanolamine, n-butylamine, di-n-butylamine, n-butanolamine, di-n-butanolamine, tri-n-butanolamine, isobutylamine, diisobutylamine, isobutanalamine, diisobutanolamine, triisobutanolamine, benzylamine, phenylamine, piperazine, piperidine and ethylenediamine. Preferably, methanolamine, dimethanolamine, trimethanolamine, triethylamine, ethanolamine, diethanolamine, triethanolamine, N-methylethanalamine, N-methyldiethanolamine, dimethylethanolamine, di-n-propylamine, tri-n-propylamine, n-propanolamine, di-n-propanolamine, tri-n-propanolamine, diisopropylamine, triisopropylamine, isopropanolamine, diisopropanolamine, trusopropanolamine, n-butylamine, di-n-butylamine, n-butanolamine, di-n-butanolamine, tri-n-butanolamine, isobutylamine, diisobutylamine, isobutanolamine, diisobutanolamine and ethylenediamine are included.

Examples of quaternary ammonium hydroxides which can be used in the process (B) or the process (B') include tetramethylammonium hydroxide, tetraethylammonium hydroxide, tetrapropylammonium hydroxide, tetraisopropylammonium hydroxide, tetrabutylammonium hydroxide, monomethyltriethylammonium hydroxide, monomethyltriethanolammomum hydroxide, monomethyltributylammonium hydroxide, octyltrimethylammonium hydroxide, benzyltrimethylammonium hydroxide, benzyltriethylammonium hydroxide, benzyltributylammonium hydroxide, phenyltrimethylammonium hydroxide and phenyltriethylammonium hydroxide. Tetramethylammonium hydroxide can be preferably used.

In the process (B) or the process (B') according to the present invention, ammonia can be used by mixing with the organic amine compound or the quaternary ammonium hydroxide. On the contrary, alkali metal hydroxides such as sodium hydroxide, potassium hydroxide and lithium hydroxide can not be used in the process (B) or the process (B¹), because a sol can not be obtained after hydrothermal treatment.

An amount of a water-soluble organic base used in the process (B) or the process (B') is a molar ratio of a water-soluble organic base of 0.7-2.5 per mol of the dicarboxylic acid compound used in the process (A), preferably a molar ratio of 1.0-2.0. When a molar ratio of the water-soluble organic base is lower than 0.7 or higher than 2.5 per mol of a dicarboxylic acid compound used in the process (A), a sol having an average particle diameter measured by dynamic light scattering method of less than 50 nm may not be obtained, or a product after hydrothermal treatment may not form a sol but a slurry, which is therefore not preferable.

By performing the process (A) and the process (B) or the process (A) and the process (B') according to the present invention, a zirconia sol having physical properties that are a pH of 3-10, a specific surface measured by nitrogen adsorption method of 50-300 m²/g, a ZrO₂ concentration of 0.5-20% by mass, an electric conductivity of 0.5-100 mS/cm, a viscosity of 1-300 mPa·s and an average particle diameter measured by dynamic light scattering method of less than or equal to 100 nm can be produced, particularly a zirconia sol having an average particle diameter measured by dynamic light scattering method of less than 50 nm can be efficiently produced.

A zirconia sol obtained by performing the process (A) and the process (B) or the process (A) and the process (B') according to the present invention can directly be used as a zirconia sol. Moreover, the zirconia sol may also be washed and condensed. Washing of a zirconia sol obtained by performing the process (A) and the process (B) or the process
(A) and the process (B') can be conducted by using ultrafiltration equipment or other equipment with purified water. By this washing operation, surplus salts can be removed. In addition, condensation of a zirconia sol obtained by performing the process (A) and the process (B) or the process (A) and the process (B') can be conducted by a method of evaporating contained water under reduced pressure or normal pressure, or a method of condensing the zirconia sol simultaneously when the washing by the above-mentioned ultrafiltration operation is performed. The washed and condensed zirconia sol has physical properties that are a pH of 3-10, a specific surface measured by nitrogen adsorption method of 50-300 m²/g, a ZrO₂ concentration of 3-50% by mass, an electric conductivity of 50-10,000 µS/cm, a viscosity of 1-300 mPa·s and an average particle diameter measured by dynamic light scattering method of less than or equal to 100 nm.

In filtrate water discharged by washing by the above-mentioned ultrafiltration operation, a large amount of the dicarboxylic acid compound and water-soluble organic base is contained, so that a mixture prepared by adding an additional dicarboxylic acid compound to the filtrate water can be newly used in the process (A) according to the present invention as an aqueous medium. Repeat use of this filtrate water enables reduction in costs of both raw material and wastewater treatment.

A pH of a zirconia sol obtained according to the present invention can optionally be adjusted by adding a base, for example, a water-soluble inorganic base such as sodium hydroxide, potassium hydroxide, lithium hydroxide and ammonia; or the above-mentioned water-soluble organic base and the like, preferably only the water-soluble organic base.

A pH of a zirconia sol obtained according to the present invention can optionally be adjusted by adding an organic acid such as glycolic acid, oxalic acid, malonic acid, malic acid, tartaric acid, succinic acid, adipic acid, maleic acid, itaconic acid and citric acid, preferably malic acid, tartaric acid or citric acid.

Viscosity of a zirconia sol obtained according to the present invention can optionally be adjusted by adding the above-mentioned organic acid, the above-mentioned water-soluble organic base, ammonia or an alkali metal hydroxide, singly or in combination. A ZrO₂ concentration of the zirconia sol can be condensed within a range of 10-60% by mass.

A zirconia sol obtained according to the present invention can be obtained as an organic solvent sol by replacing water of a dispersion medium to an organic solvent with evaporating method or other methods. Examples of organic solvents used to replace include lower alcohols such as methanol, ethanol, n-propanol, isopropanol and ethylene glycol; hydrophobic organic solvents such as toluene and hexane.

### Examples

Examples of the present invention and measuring methods of physical properties are described below. However, the present invention is not limited thereto.

### (Average particle diameter measured by dynamic light scattering method)

A sol was diluted with a dispersion medium, and the dispersed sol was measured using dispersion medium parameter by N4 Plus Submicron Particle Size Analyzer (manufactured by Beckman Coulter, Inc.), and then the measured data was calculated according to the cumulant method to obtain average particle diameter. In the dynamic light scattering method, average particle diameter of particles contained in the sol is observed, and when particles in the sol are agglomerated each other, average particle diameter of the agglomerated particles is observed.

### (Transmission electron microscope observation)

Zirconia sol particles supported on a carbon supporting film was observed with a Transmission Electron Microscope JEM-1010 (manufactured by JEOL Ltd.)

### (Specific gravity)

Specific gravity was measured at a liquid temperature of 25°C with a floating hydrometer.

### (Visicosity)

Viscosity was measured at a liquid temperature of 25°C with a type B viscometer.

### (Transmittance)

As an indicator of transparency, transmittance at a light path length of 10 mm and a wave length of 550 nm was measured with a color-difference meter TOPSCAN TC-1800MK II (manufactured by Tokyo Denshoku Co., LTD.)

### (Water content)

Water content was measured by Karl Fischer titration method.

### Example 1

163.1 g of purified water and 12.6 g of oxalic acid dihydrate were placed in a 300 ml glass beaker and the resultant mixture was heated at 40°C to obtain 5.12% by mass oxalic acid aqueous solution. 12.4 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min. Then, 58.4 g of tetramethylammonium hydroxide aqueous solution (containing 25.0% by mass tetramethylammonium hydroxide; manufactured by Tama Chemicals Co., Ltd.) was slowly added for 10 min to the mixture. At this time, the obtained mixture was slurry, and a content of the mixture calculated as ZrO₂ was 2.0% by mass. This slurry was transferred to a stainless-steel autoclave and treated hydrothermally for 8 hours at 140°C. The product after the hydrothermal treatment completely formed a sol without the presence of any flocculated substance. A content of the obtained sol calculated as ZrO₂ was 2.0% by mass. The sol had a pH of 6.4, an electric conductivity of 38.4 mS/cm, an average particle diameter measured by dynamic light scattering method of 48 nm and a transmittance of 35% when a ZrO₂ concentration of the sol was 2.0% by mass. According to an observation of particles of the sol with a transmission electron microscope, almost all particles were agglomerated particles formed by agglomerating ZrO₂ primary particles having a particle diameter of around 7 nm. The zirconia sol had no precipitate and was stable for more than 1 month at 50°C.

### Example 2

129.3 g of purified water and 17.6 g of oxalic acid dihydrate were placed in a 300 ml glass beaker and the resultant mixture was heated at 40°C to obtain 8.56% by mass oxalic acid aqueous solution. 12.4 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min. Then, 87.4 g of 25.0% by mass tetramethylammonium hydroxide aqueous solution (manufactured by Tama Chemicals Co., Ltd.) was slowly added for 10 min to the mixture. At this time, the obtained mixture was slurry, and a content of the mixture calculated as ZrO₂ was 2.0% by mass. This slurry was transferred to a stainless-steel autoclave and treated hydrothermally for 8 hours at 140°C. The product after the hydrothermal treatment completely formed a sol without the presence of any flocculated substance. A content of the obtained sol calculated as ZrO₂ was 2.0% by mass. The sol had a pH of 6.5, an electric conductivity of 44.3 mS/cm and an average particle diameter measured by dynamic light scattering method of 33 mn. According to an observation of particles of the sol with a transmission electron microscope, almost all particles were agglomerated particles formed by agglomerating ZrO₂ primary particles having a particle diameter of around 7 nm. The zirconia sol had no precipitate and was stable for more than 1 month at 50°C.

### Example 3

An operation was conducted in a similar manner as described in Example 1, except an additional heating process for 1 hour at 90°C after adding zirconium oxycarbonate powder to 5.12% by mass oxalic acid aqueous solution and further mixing for 30 min. The product after the hydrothermal treatment completely formed a sol without the presence of any flocculated substance. A content of the obtained sol calculated as ZrO₂ was 2.0% by mass. The sol had a pH of 6.3, an electric conductivity of 49.2 mS/cm and an average particle diameter measured by dynamic light scattering method of 16 nm. According to an observation of particles of the sol with a transmission electron microscope, almost all particles were agglomerated particles formed by agglomerating ZrO₂ primary particles having a particle diameter of around 7 nm. The zirconia sol had no precipitate and was stable for more than 1 month at 50°C.

### Example 4

An operation was conducted in a similar manner as described in Example 2, except an additional heating process for 1 hour at 60°C after adding zirconium oxycarbonate powder to 8.56% by mass oxalic acid aqueous solution and further mixing for 30 min. The product after the hydrothermal treatment completely formed a sol without the presence of any flocculated substance. A content of the obtained sol calculated as ZrO₂ was 2.0% by mass. The sol had a pH of 6.5, an electric conductivity of 32.3 mS/cm and an average particle diameter measured by dynamic light scattering method of 24 nm. According to an observation of particles of the sol with a transmission electron microscope, almost all particles were agglomerated particles formed by agglomerating ZrO₂ primary particles having a particle diameter of around 7 nm. The zirconia sol had no precipitate and was stable for more than 1 month at 50°C.

### Example 5

An operation was conducted in a similar manner as described in Example 2, except an additional heating process for 1 hour at 90°C after adding zirconium oxycarbonate powder to 8.56% by mass oxalic acid aqueous solution and further mixing for 30 min. The product after the hydrothermal treatment completely formed a sol without the presence of any flocculated substance. A content of the obtained sol calculated as ZrO₂ was 2.0% by mass. The sol had a pH of 6.5, an electric conductivity of 41.8 mS/cm, an average particle diameter measured by dynamic light scattering method of 15 nm and a transmittance of 92% when a content of the sol calculated as ZrO₂ was 2.0% by mass. According to an observation of particles of the sol with a transmission electron microscope, almost all particles were agglomerated particles formed by agglomerating ZrO₂ primary particles having a particle diameter of around 7 nm. The zirconia sol had no precipitate and was stable for more than 1 month at 50°C.

### Example 6

204.3 g of purified water and 12.6 g of oxalic acid dihydrate were placed in a 300 ml glass beaker and the resultant mixture was heated at 40°C to obtain 4.14% by mass oxalic acid aqueous solution. 12.4 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min, and then heated for 1 hour at 90°C. Then 17.1 g of diethanolamine (manufactured by Junsei Chemical Co., Ltd.) was slowly added to the mixture for 10 min. At this time, the obtained mixture was slurry, and a content of the mixture calculated as ZrO₂ was 2.0% by mass. This slurry was transferred to a stainless-steel autoclave and treated hydrothermally for 8 hours at 140°C. The product after the hydrothermal treatment completely formed a sol without the presence of any flocculated substance. A content of the obtained sol calculated as ZrO₂ was 2.0% by mass. The sol had a pH of 6.8, an electric conductivity of 21.2 mS/cm and an average particle diameter measured by dynamic light scattering method of 26 nm. According to an observation of particles of the sol with a transmission electron microscope, almost all particles were agglomerated particles formed by agglomerating ZrO₂ primary particles having a particle diameter of around 7 nm. The zirconia sol had no precipitate and was stable for more than 1 month at 50°C.

### Example 7

160.8 g of purified water and 12.6 g of oxalic acid dihydrate were placed in a 300 ml glass beaker and the resultant mixture was heated at 40°C to obtain 5.19% by mass oxalic acid aqueous solution. 12.4 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min, and then heated for 1 hour at 90°C. Then 60.6 g of 47.8% by mass monomethyltriethanolammonium aqueous solution was slowly added to the mixture for 10 min. At this time, the obtained mixture was slurry, and a content of the mixture calculated as ZrO₂ was 2.0% by mass. This slurry was transferred to a stainless-steel autoclave and treated hydrothermally for 5 hours at 145°C. The product after the hydrothermal treatment completely formed a sol without the presence of any flocculated substance. A content of the obtained sol calculated as ZrO₂ was 2.0% by mass. The sol had a pH of 7.3, an electric conductivity of 21.1 mS/cm and an average particle diameter measured by dynamic light scattering method of 19 nm. According to an observation of particles of the sol with a transmission electron microscope, almost all particles were agglomerated particles formed by agglomerating ZrO₂ primary particles having a particle diameter of around 7 nm. The zirconia sol had no precipitate and was stable for more than 1 month at 50°C.

### Example 8

2283.6 g of purified water and 403.4 g of oxalic acid dihydrate were placed in a 3 L glass container and the resultant mixture was heated at 40°C to obtain 10.72% by mass oxalic acid aqueous solution. 495.8 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min, and then heated for 30 min at 90°C. Then, 1747.2 g of 25.0% by mass tetramethylammonium hydroxide aqueous solution (manufactured by Tama Chemicals Co., Ltd.) was slowly added to the mixture for 1 hour. At this time, the obtained mixture was slurry, and a content of the mixture calculated as ZrO₂ was 4.0% by mass. This slurry was transferred to a stainless-steel autoclave and treated hydrothermally for 5 hours at 145°C. The product after the hydrothermal treatment completely formed a sol without the presence of any flocculated substance. A content of the obtained sol calculated as ZrO₂ was 4.0% by mass. The sol had a pH of 6.8, an electric conductivity of 42.1 mS/cm and an average particle diameter measured by dynamic light scattering method of 19 nm. A transmittance of the sol was 88% when a content of the sol calculated as ZrO₂ was adjusted to 2.0% by mass with purified water. According to an observation of particles of the sol with a transmission electron microscope, almost all particles were agglomerated particles formed by agglomerating ZrO₂ primary particles having a particle diameter of around 7 nm.

### (In case of being adjusted to an acidic condition)

23.4 g of 10% by mass oxalic acid aqueous solution was added to 100 g of the zirconia sol having a ZrO₂ concentration of 4.0% by mass obtained by conducting the above-mentioned hydrothermal treatment to obtain a zirconia sol having a ZrO₂ concentration of 3.2% by mass, a pH of 3.3, an electric conductivity of 34.3 mS/cm and an average particle diameter measured by dynamic light scattering method of 19 nm. The zirconia sol had no precipitate and was stable for more than 1 month at 50°C.

### (In case of being adjusted to a basic condition)

4.1 g of 25% by mass tetramethylammonium hydroxide aqueous solution was added to 100 g of the zirconia sol having a ZrO₂ concentration of 4.0% by mass obtained by conducting the above-mentioned hydrothermal treatment to obtain a zirconia sol having a ZrO₂ concentration of 3.8% by mass, a pH of 8.5, an electric conductivity of 45.1 mS/cm and an average particle diameter measured by dynamic light scattering method of 21 nm. The zirconia sol had no precipitate and was stable for more than 1 month at 50°C.

### Example 9

4000 g of the zirconia sol having a ZrO₂ concentration of 4.0% by mass obtained by conducting the hydrothermal treatment in Example 8 was washed and condensed with adding purified water in small portions using ultrafiltration equipment to obtain a 953 g of zirconia sol having a ZrO₂ concentration of 13.1 % by mass, a pH of 4.9, an electric conductivity of 976 µS/cm, a viscosity of 4.5 mPa·s and a transmittance of 76% when a ZrO₂ concentration of the sol was 13.1% by mass.

### (In case of being adjusted to an acidic condition)

3.93 g of 20% by mass citric acid aqueous solution and 1.57g of 25% by mass tetramethylammonium hydroxide aqueous solution were added to 300 g of a zirconia sol having ZrO₂ concentration of 13.1% by mass obtained by conducting the above-mentioned washing and condensation, and then further condensation of the obtained mixture was performed by using ultrafiltration equipment to obtain 129 g of a high concentration zirconia sol having a ZrO₂ concentration of 30,5% by mass. The obtained high concentration sol had a specific gravity of 1.354, a pH of 3.4, an electric conductivity of 3250 µS/cm, a viscosity of 6.2 mPa·s and an average particle diameter measured by dynamic light scattering method of 19 nm. The zirconia sol had no precipitate and was stable for more than 1 month at 50°C.

### (In case of being adjusted to a neutral condition)

1.96 g of 20% by mass citric acid aqueous solution and 3.46 g of 25% by mass tetramethylammonium hydroxide aqueous solution were added to 300 g of a zirconia sol having ZrO₂ concentration of 13.1% by mass obtained by conducting the above-mentioned washing and condensation, and then further condensation of the obtained mixture was performed by using ultrafiltration equipment to obtain 129 g of a high concentration zirconia sol having a ZrO₂ concentration of 30.5% by mass. The obtained high concentration sol had a specific gravity of 1.372, a pH of 6.7, an electric conductivity of 4130 µS/cm, a viscosity of 5.7 mPa·s and an average particle diameter measured by dynamic light scattering method of 19 nm. The zirconia sol had no precipitate and was stable for more than 1 month at 50°C.

### (In case of being adjusted to a basic condition)

3.93 g of 20% by mass citric acid aqueous solution and 11.0 g of 25% by mass tetramethylammonium hydroxide aqueous solution were added to 300 g of a zirconia sol having ZrO₂ concentration of 13.1% by mass obtained by conducting the above-mentioned washing and condensation, and then further condensation of the obtained mixture was performed by using ultrafiltration equipment to obtain 129 g of a high concentration zirconia sol having a ZrO₂ concentration of 30.5% by mass. The obtained high concentration zirconia sol had a specific gravity of 1.352, a pH of 9.3, an electric conductivity of 16680 µS/cm, a viscosity of 6.0 mPa·s and an average particle diameter measured by dynamic light scattering method of 19 nm. The zirconia sol had no precipitate and was stable for more than 1 month at 50°C.

### Example 10

1255.5 g of purified water and 181.5 g of oxalic acid dihydrate were placed in a 3 L glass container and the resultant mixture was heated at 40°C to obtain 9.12% by mass oxalic acid aqueous solution. 371.8 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min, and then heated for 30 min at 90°C. Then, 655.2 g of 25.0% by mass tetramethylammonium hydroxide aqueous solution (manufactured by Tama Chemicals Co., Ltd.) was slowly added to the mixture for 1 hour. At this time, the obtained mixture was slurry, and a content of the mixture calculated as ZrO₂ was 6.0% by mass. This slurry was transferred to a stainless-steel autoclave and treated hydrothermally for 5 hours at 145°C. The product after the hydrothermal treatment completely formed a sol without the presence of any flocculated substance. A content of the obtained sol calculated as ZrO₂ was 6.0% by mass. The sol had a pH of 6.4, an electric conductivity of 32.0 mS/cm and an average particle diameter measured by dynamic light scattering method of 25 nm. According to an observation of particles of the sol with a transmission electron microscope, almost all particles were agglomerated particles formed by agglomerating ZrO₂ primary particles having a particle diameter of around 7 nm. Then the sol was washed and condensed with adding purified water in small portions using ultrafiltration equipment to obtain 641.5 g of zirconia sol having a ZrO₂ concentration of 18.7% by mass, a pH of 6.4, an electric conductivity of 3350 µS/cm, a viscosity of 5.0 mPa·s and a transmittance of 45% when a ZrO₂ concentration of the sol was 18.7% by mass. 6.0 g of 20% by mass citric acid aqueous solution and 14.4 g of 25% by mass tetramethyiammonium hydroxide aqueous solution were added to the obtained zirconia sol having a ZrO₂ concentration of 18.7% by mass, and then further condensation was performed by using ultrafiltration equipment to obtain 393 g of high concentration zirconia sol having a ZrO₂ concentration of 30.5% by mass. The obtained high concentration zirconia sol had a specific gravity of 1.372, a pH of 5.5, an electric conductivity of 1287 µS/cm, a viscosity of 5.5 mPa·s and an average particle diameter measured by dynamic light scattering method of 25 nm. The zirconia sol had no precipitate and was stable for more than 1 month at 50°C.

### Example 11

126.8 g of purified water and 12.6 g of oxalic acid dihydrate were placed in a 300 ml glass beaker and the resultant mixture was heated at 40°C to obtain 6.46% by mass oxalic acid aqueous solution. 19.7 g of zirconium oxynitrate solution (product name: Zircosol ZN, in which a content calculated as ZrO₂ is 25.0% by mass; manufactured by Daiichi Kigenso Kagaku Kagyo Co,. Ltd.) was slowly added to this aqueous solution with stirring, and the resultant mixture was further mixed for 30 min, and then heated for 30 min at 90°C. Then, 87.4 g of 25.0% by mass tetramethylammonium hydroxide aqueous solution (manufactured by Tama Chemicals Co., Ltd.) was slowly added to the mixture for 10 min. At this time, the obtained mixture was slurry, and a content of the mixture calculated as ZrO₂ was 2.0% by mass. This slurry was transferred to a stainless-steel autoclave and treated hydrothermally for 8 hours at 140°C. The product after the hydrothermal treatment completely formed a sol without the presence of any flocculated substance. A content of the obtained sol calculated as ZrO₂ was 2.0% by mass. The sol had a pH of 6.7, an electric conductivity of 44.9 mS/cm and an average particle diameter measured by dynamic light scattering method of 20 nm. According to an observation of particles of the sol with a transmission electron microscope, almost all particles were agglomerated particles formed by agglomerating ZrO₂ primary particles having a particle diameter of around 7 nm. The zirconia sol had no precipitate and was stable for more than 1 month at 50°C.

### Example 12

1210.6 g of filtrate water which was discharged when washing and condensation process of the sol was conducted using ultrafiltration equipment in Example 9 (each content of filtrate water was 9.02% by mass of tetramethylammonium hydroxide, 5.93% by mass of oxalic acid and 1.01% by mass of zirconium compound calculated as ZrO₂) and 498.3 g of purified water were poured into a 3 L glass container and mixed. 101.2 g of oxalic acid dihydrate was put and dissolved in the obtained aqueous solution with stirring. 217.1 g of zirconium oxycarbonate powder (ZrOCO₃, in which a content of the powder calculated as ZrO₂ is 39.76% by mass; manufactured by AMR International Corp.) was slowly added to the resultant aqueous solution with stirring, and the resultant mixture was further mixed for 30 min, and then heated for 30 min at 90°C. Then, 436.5 g of 25.0% by mass tetramethylammonium hydroxide aqueous solution (manufactured by Tama Chemicals Co., Ltd.) was slowly added to the mixture for 1 hour. A mass ratio of tetramethylammonium hydroxide in discharged filtrate water to newly added tetramethylammonium hydroxide was 50:50. At this time, the obtained mixture was slurry, and a content of the mixture calculated as ZrO₂ was 4.0% by mass. This slurry was transferred to a stainless-steel autoclave and treated hydrothermally for 5 hours at 145°C under stirring. The product after the hydrothermal treatment completely formed a sol without a presence of any flocculated substance. A content of the obtained sol calculated as ZrO₂ was 4.0% by mass. The sol had a pH of 7.0, an electric conductivity of 43.1 mS/cm and an average particle diameter measured by dynamic light scattering method of 26 nm. An average particle diameter measured by dynamic light scattering method of the obtained sol was slightly increased compared with that of the zirconia sol obtained in Example 7. A transmittance of the sol was 85% when a content of the obtained sol calculated as ZrO₂ was adjusted to 2.0% by mass with purified water. According to an observation of particles of the sol with a transmission electron microscope, almost all particles were agglomerated particles formed by agglomerating ZrO₂ primary particles having a particle diameter of around 7 nm.

Then, the zirconia sol having a ZrO₂ concentration of 4.0% by mass obtained by conducting the above-mentioned hydrothermal treatment was washed and condensed with adding purified water in small portions using ultrafiltration equipment to obtain 506.9 g of high concentration zirconia sol having a ZrO₂ concentration of 16.8% by mass. The obtained high concentration zirconia sol had a specific gravity of 1.168, a pH of 5.1, an electric conductivity of 720 µS/cm, a viscosity of 4.5 mPa·s, an average particle diameter measured by dynamic light scattering method of 26 nm and a transmittance of 63% when a ZrO₂ concentration of the sol was 16.8% by mass. The zirconia sol had no precipitate and was stable for more than 1 month at 50°C.

### Example 13

1357.8 g of purified water and 166.4 g of oxalic acid dihydrate were placed in a 3 L glass container and the resultant mixture was heated at 40°C to obtain 7.80% by mass oxalic acid aqueous solution. 371.8 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min, and then heated for 30 min at 90°C. Then, 568.0 g of 25.0% by mass tetramethyl ammonium hydroxide aqueous solution (manufactured by Tama Chemicals Co., Ltd.) was slowly added to the mixture for 10 min. At this time, the obtained mixture was slurry, and a content of the mixture calculated as ZrO₂ was 6.0% by mass. This slurry was transferred to a stainless-steel autoclave and treated hydrothermally for 5 hours at 145°C. The product after the hydrothermal treatment completely formed a sol without the presence of any flocculated substance. A content of the obtained sol calculated as ZrO₂ was 6.0% by mass. The sol had a pH of 6.3, an electric conductivity of 29.5 mS/cm and an average particle diameter measured by dynamic light scattering method of 28 nm. According to an observation of particles of the sol with a transmission electron microscope, almost all particles were agglomerated particles formed by agglomerating ZrO₂ primary particles having a particle diameter of around 7 nm. The zirconia sol had no precipitate and was stable for more than I month at 50°C.

### Example 14

110.9 g of purified water and 20.2 g of oxalic acid dihydrate were placed in a 300 ml glass beaker and the resultant mixture was heated at 40°C to obtain 11.01% by mass oxalic acid aqueous solution. 6.2 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min, and then heated for 30 min at 90°C. Then, 109.2 g of 25.0% by mass tetramethylammonium hydroxide aqueous solution (manufactured by Tama Chemicals Co., Ltd) was slowly added to the mixture for 10 min. At this time, the obtained mixture was slurry, and a content of the mixture calculated as ZrO₂ was 1.0% by mass. This slurry was transferred to a stainless-steel autoclave and treated hydrothermally for 5 hours at 145°C. The product after the hydrothermal treatment completely formed a sol without the presence of any flocculated substance. A content of the obtained sol calculated as ZrO₂ was 1.0% by mass. The sol had a pH of 6.6, an electric conductivity of 52.5 mS/cm and an average particle diameter measured by dynamic light scattering method of 16 nm. According to an observation of particles of the sol with a transmission electron microscope, almost all particles were agglomerated particles formed by agglomerating ZrO₂ primary particles having a particle diameter of around 7 nm. The zirconia sol had no precipitate and was stable for more than 1 month at 50°C.

### Example 15

175.2 g of purified water and 15.1 g of oxalic acid dihydrate were placed in a 300 ml glass beaker and the resultant mixture was heated at 40°C to obtain 5.67% by mass oxalic acid aqueous solution. 12.4 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min, and then heated for 30 min at 90°C. Then, 43.7 g of 25.0% by mass tetramethylammonium hydroxide aqueous solution was slowly added to the mixture for 10 min. At this time, the obtained mixture was slurry, and a content of the mixture calculated as ZrO₂ was 2.0% by mass. This slurry was transferred to a stainless-steel autoclave and treated hydrothermally for 8 hours at 140°C. The product after the hydrothermal treatment completely formed a sol without the presence of any flocculated substance. A content of the obtained sol calculated as ZrO₂ was 2.0% by mass. The sol had a pH of 3.8, an electric conductivity of 25.2 mS/cm and an average particle diameter measured by dynamic light scattering method of 37 nm. According to an observation of particles of the sol with a transmission electron microscope, almost all particles were agglomerated particles formed by agglomerating ZrO₂ primary particles having a particle diameter of around 7 nm. The zirconia sol had no precipitate and was stable for more than 1 month at 50°C.

### Example 16

28.5 g of purified water and 30.3 g of oxalic acid dihydrate were placed in a 300 ml glass beaker and the resultant mixture was heated at 70°C to obtain 36.7% by mass oxalic acid aqueous solution. 20.2 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min, and then heated for 30 min at 90°C. Then, 167.4 g of 25.0% by mass tetramethylammonium hydroxide aqueous solution (manufactured by Tama Chemicals Co., Ltd.) was slowly added to the mixture for 10 min. At this time, the obtained mixture was slurry, and a content of the mixture calculated as ZrO₂ was 3.3% by mass. This slurry was transferred to a stainless-steel autoclave and treated hydrothermally for 8 hours at 140°C. The product after the hydrothermal treatment completely formed a sol without the presence of any flocculated substance. A content of the obtained sol calculated as ZrO₂ was 3.3% by mass. The sol had a pH of 8.3, an electric conductivity of 62.1 mS/cm and an average particle diameter measured by dynamic light scattering method of 37 nm. According to an observation of particles of the sol with a transmission electron microscope, almost all particles were agglomerated particles formed by agglomerating ZrO₂ primary particles having a particle diameter of around 7 nm. The zirconia sol had no precipitate and was stable for more than 1 month at 50°C.

### Example 17

0.40 g of diisopropylamine was added with stirring to 305 g of the zirconia sol having a ZrO₂ concentration of 13.1% by mass obtained in Example 9, and the resultant sol was condensed by using ultrafiltration equipment to obtain 131.0 g of zirconia sol having a ZrO₂ concentration of 30.5% by mass. Then, 0.40 g of diisopropylamine was added to the obtained zirconia sol and water was removed by distillation from the sol using a rotary evaporator with adding 5 L of methanol in small portions under reduced pressure to obtain 131.0 g of zirconia sol dispersed in methanol. The zirconia sol dispersed in methanol had a specific gravity of 1.110, a viscosity of 6.3 mPa·s, a pH of 6.5 (mass-equivalent mixture with water), a ZrO₂ concentration of 30.5% by mass, a water content of 0.9% by mass and an average particle diameter measured by dynamic light scattering method of 19 nm. The sol showed no undesired phenomena such as precipitate generation, white turbidity and viscosity increase after leaving for 1 month at 50°C and was stable.

### Comparative Example I

171.0 g of purified water and 12.6 g of oxalic acid dihydrate were placed in a 300 ml glass beaker and the resultant mixture was heated at 40°C to obtain 4.90% by mass oxalic acid aqueous solution. 37.2 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min, and then heated for 30 min at 90°C. Then, 26.2 g of 25.0% by mass tetramethylammonium hydroxide aqueous solution (manufactured by Tama Chemicals Co., Ltd.) was slowly added to the mixture for 10 min. At this time, the obtained mixture was slurry, and a content of the mixture calculated as ZrO₂ was 6.0% by mass. This slurry was transferred to a stainless-steel autoclave and treated hydrothermally for 8 hours at 140°C. The product after the hydrothermal treatment had flocculated substance, and did not form a sol completely. The obtained product had a pH of 4.8, an electric conductivity of 15.6 mS/cm and a transmittance of 0.3% when a ZrO₂ concentration of the sol was 2.0% by mass.

### Comparative Example 2

165.4 g of purified water and 10.5 g of formic acid (containing 88% by mass of HCOOH) were placed in a 300 ml glass beaker to obtain 5.25% by mass formic acid aqueous solution. 12.4 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min, and then heated for 30 min at 90°C. As a result, the zirconium oxycarbonate powder was dissolved completely. Then, 58.2 g of 25.0% by mass tetramethylammonium hydroxide aqueous solution (manufactured by Tama Chemicals Co., Ltd.) was slowly added to the mixture for 10 min, and the resultant mixture became immediately cloudy to change into a slurry mixture. At this time, the mixed liquid was slurry and a content of the mixture calculated as ZrO₂ was 6.0% by mass. This slurry was transferred to a stainless-steel autoclave and treated hydrothermally for 8 hours at 140°C. The product after the hydrothermal treatment did not form a sol, but remained as slurry. The obtained slurry had a pH of 4.8 and an electric conductivity of 35.4 mS/cm.

### Comparative Example 3

109.3 g of purified water and 12.6 g of oxalic acid dihydrate were placed in a 300 ml glass beaker and the resultant mixture was heated at 40°C to obtain 7.38% by mass oxalic acid aqueous solution, 12.4 g of zirconium oxycarbonate powder (ZrOCO₃, in which a content of the powder calculated as ZrO₂ is 39.7G% by mass; manufactured by AMR International Corp.) was slowly added to this aqueous solution with stirring, and the resultant mixture was further mixed for 30 min. Then, 112.2 g of 10.0% by mass sodium hydroxide aqueous solution was slowly added to the mixture for 20 min. At this time, the obtained mixture was slurry, and a content of the mixture calculated as ZrO₂ was 6.0% by mass. This slurry was transferred to a stainless-steel autoclave and treated hydrothermally for 8 hours at 140°C. The product after the hydrothermal treatment did not form a sol, but remained as slurry. The obtained slurry had a pH of 10.3 and an electric conductivity of 67.8 mS/cm.

### Comparative Example 4

52.6 g of purified water and 20.2 g of oxalic acid dihydrate were placed in a 300 ml glass beaker and the resultant mixture was heated at 60°C to obtain 12.4% by mass oxalic acid aqueous solution. 20.2 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min, and then heated for 30 min at 90°C. Then, 167.4 g of 25.0% by mass tetramethylammonium hydroxide aqueous solution (manufactured by Tama Chemicals Co., Ltd.) was slowly added to the mixture for 20 min. At this time, the obtained mixture was slurry, and a content of the mixture calculated as ZrO₂ was 3.3% by mass. This slurry was transferred to a stainless-steel autoclave and treated hydrothermally for 8 hours at 140°C. The product after the hydrothermal treatment did not form a sol, but remained as slurry. The obtained slurry had a pH of 13.9, an electric conductivity of 10.3 mS/cm, and a transmittance of 0.6% when a ZrO₂ concentration of the sol was 2.0% by mass.

### Comparative Example 5

237.2 g of purified water and 18.9 g of oxalic acid dihydrate were placed in a 300 ml glass beaker and the resultant mixture was heated at 40°C to obtain 4.40% by mass oxalic acid aqueous solution. 15.5 g of zirconium oxycarbonate powder (ZrOCO₃, in which a content of the powder calculated as ZrO₂ is 39.76% by mass; manufactured by AMR International Corp.) was slowly added to this aqueous solution with stirring, and the resultant mixture was further mixed for 30 min, and then heated for 30 min at 90°C. Then, 36.4 g of 25.0% by mass tetramethylammonium hydroxide aqueous solution (manufactured by Tama Chemicals Co., Ltd.) was slowly added to the mixture for 10 min. At this time, the obtained mixture was slurry, and a content of the mixture calculated as ZrO₂ was 2.0% by mass. This slurry was transferred to a stainless-steel autoclave and treated hydrothermally for 8 hours at 140°C. The product after the hydrothermal treatment had precipitate, and did not form a sol completely. The obtained product had a pH of 1.8 and an electric conductivity of 29.0 mS/cm.

Production conditions of zirconia sols according to the present invention in Examples and Comparative Examples are listed in Table 1, and physical properties of the obtained zirconia sols are listed in Table 2.

Table 1

**Table 1**

| | Preparation Conditions for Zirconia Sol | | | |
|---|---|---|---|---|
| Example | Base: Zr: Carboxylic Acid (molar ratio) | ZrO₂ Concentration (% by mass) | Process (B'): Heating before Hydrothermal Treatment | Hydrothermal Treatment Condition |
| Example 1 | 4:1:2.5 | 2 | - | 140°C-8 Hr |
| Example 2 | 6:1:3.5 | 2 | - | 140°C-8 Hr |
| Example 3 | 4:1:2.5 | 2 | 90°C-1 Hr | 140°C-8 Hr |
| Example 4 | 6:1:3.5 | 2 | 60°C-1 Hr | 140°C-8 Hr |
| Example 5 | 6:1:3.5 | 2 | 90°C-1 Hr | 140°C-8 Hr |
| Example 6 | 4:1:2.5 | 2 | 90°C-1 Hr | 140°C-8 Hr |
| Example 7 | 4:1:2.5 | 2 | 90°C-1 Hr | 145°C-5 Hr |
| Example 8 | 3:1:2 | 4 | 90°C-30min | 145°C-5 Hr |
| Example 9 | 3:1:2 | 4 | 90°C-30 min | 145°C-5 Hr |
| Example 10 | 1.5:1:1.2 | 6 | 90°C-30 min | 145°C-5 Hr |
| Example 11 | 6:1:2.5 | 2 | 90°C-1 Hr | 145°C-5 Hr |
| Example 12 | 3:1:2 (TMAH* Recycle Ratio 50%) | 4 | 90°C-30min | 145°C-5 Hr |
| Example 13 | 1.3:1:1.1 | 6 | 90°C-30 min | 1.45°C-5 Hr |
| Example 14 | 15:1:8 | 1 | 90°C-30 min | 145°C-5 Hr |
| Example 15 | 3:1:3 | 2 | 90°C-30 min | 140°C-8 Hr |
| Example 16 | 7:1:3.6 | 3.3 | 90°C-30 min | 140°C-8 Hr |
| Comparative Example 1 | 0.6:1:0.8 | 6 | 90°C-30 min | 140°C-8 Hr |
| Comparative Example 2 | 4:1:5 (Formic Acid) | 2 | 90°C-30 min | 140°C-8 Hr |
| Comparative Example 3 | 5 (KOH):1:2.5 | 2 | 90°C-30 min | 140°C-8 Hr |
| Comparative Example 4 | 7:1:2.4 | 3.3 | 90°C-30 min | 140°C-8 Hr |
| Comparative Example 5 | 2:1:3 | 2 | 90°C-30 min | 140°C-8 Hr |

| | | | | |
|---|---|---|---|---|
| *TMAH (Tetramethylammonuim Hydroxide) | | | | |

### Table 2

**Table 2**

| | Zirconia Sol | | | | | | | | | |
|---|---|---|---|---|---|---|---|---|---|---|
| | After Hydrothermal Treatment | | | | | Condensation, Washing and pH Adjustment | | | | |
| Example | ZrO₂ Concentration (% by mass) | pH | Electric Conductivity (mS/cm) | Average Particle Diameter (nm) | Transmittance (%) | ZrO₂ Concentration after washing /Condensation by mass) | pH after Washing /Condensation | Transmittance atter Condensation (%) | pH Adjustment | Average Particle Diameter (nm) |
| Example 1 | 2 | 6.4 | 38.4 | 48 | 35 | | | | | |
| Example 2 | 2 | 6.5 | 44.3 | 33 | | | | | | |
| Example 3 | 2 | 6.3 | 49.2 | 16 | | | | | | |
| Example 4 | 2 | 6.5 | 32.3 | 24 | | | | | | |
| Example 5 | 2 | 6.5 | 41.8 | 15 | 92 | | | | | |
| Example 6 | 2 | 6.8 | 21.2 | 26 | | | | | | |
| Example 7 | 2 | 7.3 | 21.1 | 19 | | | | | | |
| Example 8 | 4 | 6.8 | 42.1 | 19 | 88 | | | | 3.3 | 19 |
| | | | | | | | | | 8.5 | 21 |
| Example 9 | 4 | 6.8 | 42.1 | 19 | 88 | 13.1 | 4.9 | 76 | 3.4 | 19 |
| | | | | | | | | | 6.7 | 19 |
| | | | | | | | | | 9.3 | 19 |
| Example 10 | 6 | 6.4 | 32.0 | 25 | | 18.7 | 6.4 | 45 | | |
| | | | | | | 30.5 | 5.5 | | | 25 |
| Example 11 | 2 | 6.7 | 44.9 | 20 | | | | | | |
| Example 12 | 4 | 7.0 | 43.1 | 26 | 85 | 16.8 | 5.1 | 63 | | 26 |
| Example 13 | 6 | 6.3 | 29.5 | 28 | | | | | | |
| Example 14 | 1 | 6.6 | 52.5 | 16 | | | | | | |
| Example 15 | 2 | 3.8 | 25.2 | 37 | | | | | | |
| Example 16 | 3.3 | 8.3 | 62.1 | 37 | | | | | | |
| Comparative Example 1 | 6 | 4 | 15.6 | A* | 0.3 | | | | | |
| Comparative Example 2 | 2 | 4.8 | 35.4 | B* | | | | | | |
| Comparative Example 3 | 2 | 10.3 | 67.8 | B* | | | | | | |
| Comparative Example 4 | 3.3 | 13.9 | 10.3 | B* | 0.6 | | | | | |
| Comparative Example 5 | 2 | 1.8 | 29.0 | A* | | | | | | |

| | | | | | | | | | | |
|---|---|---|---|---|---|---|---|---|---|---|
| A*: Incomplete sol formation B*: Remaining as slurry | | | | | | | | | | |

As a zirconia sol obtained by a method according to the present invention has excellent transparency and stability, the sol can be used for various applications. For example, the sol is preferably used for fillers used for composite materials such as nano-composite and optical applications such as high refractive index materials and refractive index adjusters, and also applicable for raw materials used for electronic materials such as ceramics and sensors, binders such as fireproof molded articles and casting molds, catalysts, abrasive compounds and other applications.

## Claims

1. A method for producing a zirconia sol, the method comprising:
(A) mixing a dicarboxylic acid compound with a zirconium compound in an aqueous medium, wherein a molar ratio of the dicarboxylic acid compound is more than 1 and less than or equal to 10 per mol of zirconium atom in the zirconium compound; and
(B) adding 0.7-2.5 mol of a water-soluble organic base per mol of the dicarboxylic acid compound contained in a mixture obtained by the process (A) to the mixture and then treating hydrothermally a resultant mixture.

2. The method for producing a zirconia sol according to claim 1, wherein a temperature of the hydrothermal treatment of the process (B) is 110-250°C.

3. The method for producing a zirconia sol according to claim 1 or 2, further comprising washing and condensation after the process (B).

4. A method for producing a zirconia sol, the method comprising:
(A) mixing a dicarboxylic acid compound with a zirconium compound in an aqueous medium, wherein a molar ratio of the dicarboxylic acid compound is more than 1 and less than or equal to 10 per mol of zirconium atom in the zirconium compound; and
(B') after heating a mixture obtained by the process (A) to 50-100°C, adding 0.7-2.5 mol of a water-soluble organic base per mol of the dicarboxylic acid compound contained in the mixture to the mixture and then treating hydrothermally a resultant mixture.

5. The method for producing a zirconia sol according to claim 4, wherein a temperature of the hydrothermal treatment of the process (B') is 110-250°C.

6. The method for producing a zirconia sol according to claim 4 or 5, further comprising washing and condensation after the process (B').

7. The method for producing a zirconia sol according to any one of claims 1 to 6, wherein at least one compound selected from a group consisting of oxalic acid, malonic acid, malic acid, tartaric acid, succinic acid, adipic acid, maleic acid and itaconic acid is used as the

8. The method for producing a zirconia sol according to any one of claims 1 to 7, wherein at least one compound selected from a group consisting of zirconium nitrate, zirconium oxychloride, zirconium oxynitrate, zirconium oxysulfate and zirconium oxycarbonate is used as the zirconium compound.

9. The method for producing a zirconia sol according to any one of claims 1 to 8, wherein an organic amine compound or a quaternary ammonium hydroxide is used as the water-soluble organic base.

10. The method for producing a zirconia sol according to any one of claims 1 to 9, wherein at least one compound selected from a group consisting of methylamine, dimethylamine, trimethylamine, methanolamine, dimethanolamine, trimethanolamine, ethylamine, diethylamine, triethylamine, ethanolamine, diethanolamine, triethanolamine, N-methylethanolamine, N-methyldiethanolamine, dimethylethanolamine, n-propylamine, di-n-propylamine, tri-n-propylamine, n-propanolamine, di-n-propanolamine, tri-n-propanolamine, isopropylamine, diisopropylamine, triisopropylamine, isopropanolamine, diisopropanolamine, triisopropanolainine, n-butylamine, di-n-butylamine, n-butanolamine, di-n-butanolamine, tri-n-butanolamine, isobutylamine, diisobutylamine, isobutanolamine, diisobutanolamine, triisobutanolamine, benzylamine, phenylamine, piperazine, piperidine and ethylenediamine is used as the organic amine compound.

11. The method for producing a zirconia sol according to any one of claims 1 to 10, wherein at least one compound selected from a group consisting of tetrametlaylamrnonium hydroxide, tetraethylammonium hydroxide, tetrapropylammonium hydroxide, tetraisopropylammonium hydroxide, tetrabutylammonium hydroxide, monomethyltriethylammonium hydroxide, monomethyltriethanolammonium hydroxide, monomethyltributylammonium hydroxide, octyltrimethylammonium hydroxide, benzyltrimethylammonium hydroxide, benzyltrietbylamrnonium hydroxide, benzyltributylammonium hydroxide, phenyltrimethylammonium hydroxide and phenyltriethylammonium hydroxide is used as the quaternary ammonium hydroxide.
